# EUROPÄISCHE PATENTSCHRIFT

(11) **EP 0 778 953 B1**
(45) Veröffentlichungstag und Bekanntmachung des Hinweises auf die Patenterteilung: **23.10.2002**
(21) Anmeldenummer: 96922732.1
(22) Anmeldetag: 27.06.1996
(51) Int. Cl.: G01S 7/03, G01S 13/93

(54) **MONOSTATISCHER FMCW-RADARSENSOR**
MONOSTATIC FMCW RADAR SENSOR
DETECTEUR RADAR MONOSTATIQUE A MODULATION DE FREQUENCE ET A ONDES ENTRETENUES

(30) Priorität: 01.07.1995 DE 19524058; 16.08.1995 DE 19530065
(43) Veröffentlichungstag der Anmeldung: 18.06.1997
(73) Patentinhaber: Robert Bosch GmbH, 70469 Stuttgart (DE)
(72) Erfinder: PFIZENMAIER, Heinz, D-71229 Leonberg (DE); LOWBRIDGE, Paul, Lincoln LN6 3RL (GB); PRIME, Brian, Lincoln LN6 9RX (GB); NASH, Colin, Lincoln LN2 4AX (GB); DAWSON, David, Waddington LN5 9BY (GB)
(86) Internationale Anmeldenummer: DE9601137
(87) Internationale Veröffentlichungsnummer: WO97002496

(56) Entgegenhaltungen:
- EP-A- 0 634 667
- EP-A- 0 685 930
- EP-A- 0 730 165
- DE-A- 4 412 770
- INTERNATIONAL MICROWAVE SYMPOSIUM DIGEST (MTT-S), ALBUQUERQUE, JUNE 1 - 5, 1992, Bd. 2, 1.Juni 1992, REID D W, Seiten 721-724, XP000343421 WILLIAMS D A: "MILLIMETRE WAVE RADARS FOR AUTOMOTIVE APPLICATIONS"
- PATENT ABSTRACTS OF JAPAN vol. 003, no. 077 (E-120), 30.Juni 1979 & JP,A,54 053891 (HITACHI LTD), 27.April 1979

## Beschreibung

### Stand der Technik

Die Erfindung geht aus von einem FMCW-Radarsensor für ein Fahrzeug zur Detektion von Objekten nach der Gattung des Hauptanspruchs. Es ist schon bekannt, für einen FMCW-Radarsensor zum Senden und Empfangen eine gemeinsame Antenne zu verwenden. Die Trennung des Sende- und Empfangssignals erfolgt dabei mit einem Zirkulator, der in Hohlleitertechnik gefertigt ist. Derartige Techniken sind sehr aufwendig und daher nur für Spezialfälle verwendbar, nicht jedoch für einfache Fahrzeuganwendungen.

Aus der EP 498 524 A2 ist desweiteren ein bistatischer FMCW-Radarsensor bekannt, bei dem getrennte Sende- und Empfangsantennen vorgeschlagen wurden. Mit dieser Anordnung kann zwar auf den teueren Zirkulator verzichtet werden. Nachteilig ist jedoch, daß bei diesem Sensor getrennte Antennen zum Senden und Empfangen mit zwei dielektrischen Linsen notwendig sind. Dadurch erhöht sich ebenfalls der Aufwand.

### Vorteile der Erfindung

Der erfindungsgemäße FMCW-Radarsensor für ein Fahrzeug zur Detektion von einem oder mehreren Objekten mit den kennzeichnenden Merkmalen des Hauptanspruchs hat demgegenüber den Vorteil ist, daß einerseits zum Senden und Empfangen die gleichen Antennen verwendet werden können. Andererseits wird der aufwendige Zirkulator für die Signaltrennung des Sende- und Empfangssignals nicht benötigt, so daß sich dadurch ein einfacher Aufbau des FMCW-Radarsensors ergibt. Besonders vorteilhaft ist weiter, daß durch die Mikroleiterstreifentechnik der Aufbau sehr kostengünstig ist. Auch entfallen aufwendige Justagearbeiten der Antennen.

Durch die in den abhängigen Ansprüchen aufgeführten Maßnahmen sind vorteilhafte Weiterbildungen und Verbesserungen des im Hauptanspruch angegebenen FMCW-Radarsensors möglich. Besonders günstig ist, daß durch die dielektrischen Stielstrahler die Ausleuchtung der Linse beim Senden und Empfangen verbessert wird.

Die Linse weist vorteilhaft eine elliptische Form auf, so daß insbesondere bei einem optimierten Antennenarray die Linse voll ausgeleuchtet wird. Dadurch gelingt es, auch bei größeren Wippneigungen des Fahrzeuges das Ziel nicht zu verlieren, da sich das Ziel immer innerhalb des Strahlungsbereiches der Antennen befindet.

Durch die Drehung der nebeneinander angeordneten Antennen (Antennen-Feeds) um einen Winkel von ca. 45° relativ zur Linsenachse erfolgt auf einfache Weise eine Entkopplung von Objekten, die beispielsweise von auf einer Straße entgegenkommenden Kraftfahrzeuge unterschieden werden müssen. Für eine Entkopplung der Antennen-Feeds untereinander kann bei einer Ausführungsform mit drei Antennen-Feeds der mittlere Antenne-Feed dagegen vorteilhaft um ca. 135° gedreht angeordnet werden.

Vorteilhaft ist weiter, den Gunn-Oszillator über einen Stufentransformator von der Hohlleiterebene auf die Mikrostreifenleiterebene zu schalten. Dadurch erfolgt eine einfache Ankopplung der Hochfrequenzsignale.

Um die mittlere Sendeleistung zu verringern, ist die Sendeleistung nach Ablauf der Rampenfunktion austastbar. Der Gunn-Oszillator wird dann nur während der Rampenzeiten linear in seiner Frequenz verändert.

Vorteilhaft ist weiter, insbesonderre bei einem Mehrrampenverfahren die Rampenfunktion trapezförmig oder dreieckförmig auszubilden, um die in verschiedenen Entfernungen befindlichen Objekte einfacher zu erkennen.

Mit Hilfe der Auswerteschaltung kann nicht nur die Fahrzeuggeschwindigkeit, der Abstand und Fahrwinkel, sondern auch der relative Abstand zum detektierten Objekt bestimmt werden.

Durch den Einbau des FMCW-Radarsensors in ein hermetisch geschlossenes Gehäuse sind die empfindlichen Bauteile gegen äußere Einflüsse wie Verschmutzung und Feuchtigkeit geschützt. Um die bei Temperaturschwankungen auftretenden Druckdifferenzen auszugleichen, ist ein Druckausgleichselement vorgesehen, das vorteilhaft an der äußeren Wandung des Gehäuses angeordnet ist. Dadurch wird weitgehend ein konstanter Innendruck erreicht, so daß eine Taubildung im Gehäuse vermieden wird.

Eine bevorzugte Anwendung des FMCW-Radarsensors ist die Abstandsmessung bei Verwendung des Sensors in Verbindung mit einem Fahrgeschwindigkeitsregler oder auch als Einparkhilfe eines Kraftfahrzeugs.

### Zeichnung

Ein Ausführungsbeispiel der Erfindung in der Zeichnung dargestellt und in der nachfolgenden Beschreibung näher erläutert. Es zeigen Figur 1 ein erstes Ausführungsbeispiel, Figur 2 zeigt ein Schnittbild des Ausführungsbeispiels, Figur 3 zeigt ein Diagramm und Figur 4 zeigt ein Blockschaltbild.

### Beschreibung des Ausführungsbeispiels

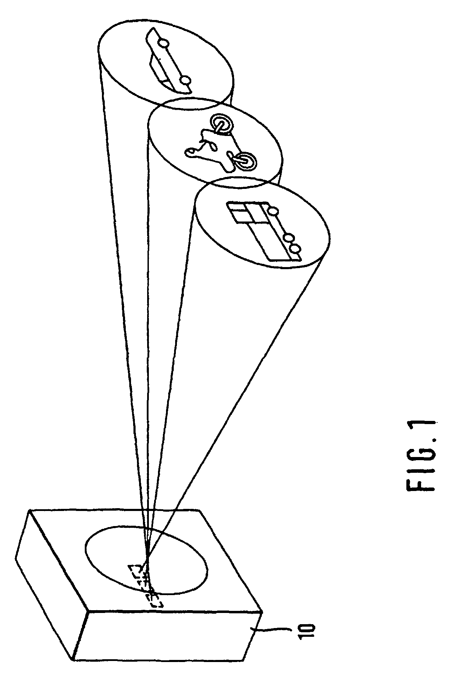

Figur 1 zeigt ein Gehäuse 10 eines FMCW-Radarsensors mit drei nebeneinanderliegenden Strahlungskeulen. Die Strahlungskeulen können sich teilweise überschneiden und stellen die aktive Fläche dar, in der ein Objekt erkannt werden kann. Bei Verwendung in einem Kraftfahrzeug können somit auch mehrere Objekte gleichzeitig detektiert werden. Dabei kann unterschieden werden, ob die Objekte in Fahrtrichtung des Kraftfahrzeuges fahren, am Fahrbahnrand stehen oder entgegenkommen. Alternativ ist eine entsprechende Anwendung auch bei der Schiffahrt vorgesehen.

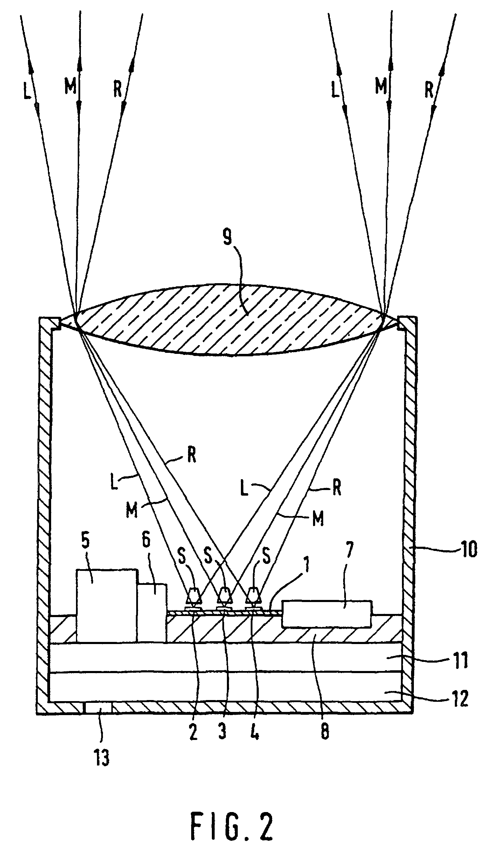

Figur 2 zeigt den FMCW-Radarsensor als monostatischen Sensor im Schnittbild. Das Gehäuse 10 ist vorzugsweise hermetisch geschlossen, wobei an einer Seite eine Öffnung für eine dielektrische Linse 9 vorgesehen ist. An geeigneter Stelle der Wandung, am Umfang oder am Boden des Gehäuses 10 ist ein Druckausgleichselement 13 angeordnet. Innerhalb des Gehäuses 10 ist eine Basisplatte 8 vorgesehen, auf der im mittleren Bereich wenigstens eine, vorzugsweise drei nebeneinander angeordnete Sende-/Empfangsantennen-Feeds 2, 3, 4 für die gemeinsame Linse in Mikroleiterstreifentechnik ausgebildet sind. Die Antennen-Feeds 2, 3, 4 können auch als Antennen-Feeds-Array sogenannte Patcharrays ausgebildet sein. Zur Strahlkonzentration können zusätzlich dielektrische Stielstrahler S auf der wenigstens einen Antenne 2, 3, 4 angebracht sein. Desweiteren ist ein Stabilisierungsnetzwerk 7 vorgesehen, mit dem die Frequenz des Gunn-Oszillators 5 für das Mehrfach-Rampenverfahren linearisiert und stabilisiert wird. Zwischen dem Gunn-Oszillator 5 und dem Mikrostreifenleiter 1 ist ein Stufentrafo 6 vorgesehen, der die Hochfrequenz des in Hohlleitertechnik hergestellten Gunn-Oszillators 5 auf die Struktur des lateralen Mikrostreifenleiters 1 überträgt. Die Struktur wird von einer Basisplatte 8 getragen. Unterhalb der Basisplatte 8 ist eine Auswertungsschaltung 11 angeordnet, die die Sendeund Empfangssignale auswertet. Unterhalb der Auswertungsschaltung 11 ist eine Anschlußebene 12 vorgesehen, über die die entsprechenden Signale an nicht dargestellten Steckverbinder oder Leitungen nach außen herausgeführt sind.

Die Sende- und Empfangsantennen-Feeds 2, 3, 4 sind etwa zentrisch derart angeordnet, daß sie im Strahlengang der dielektrischen Linse 9 liegen. Zur besseren Anpassung ist die dielektrische Linse 9 elliptisch ausgebildet. Schematisch ist die Ausbreitung der Strahlen links L, Mitte M und rechts R angedeutet. Durch diese Anordnung der Antennen und die Brennweite der dielektrischen Linse 9 ergeben sich die entsprechenden elektromagnetischen Ausbreitungskeulen, wie sie in Figur 1 schematisch dargestellt sind.

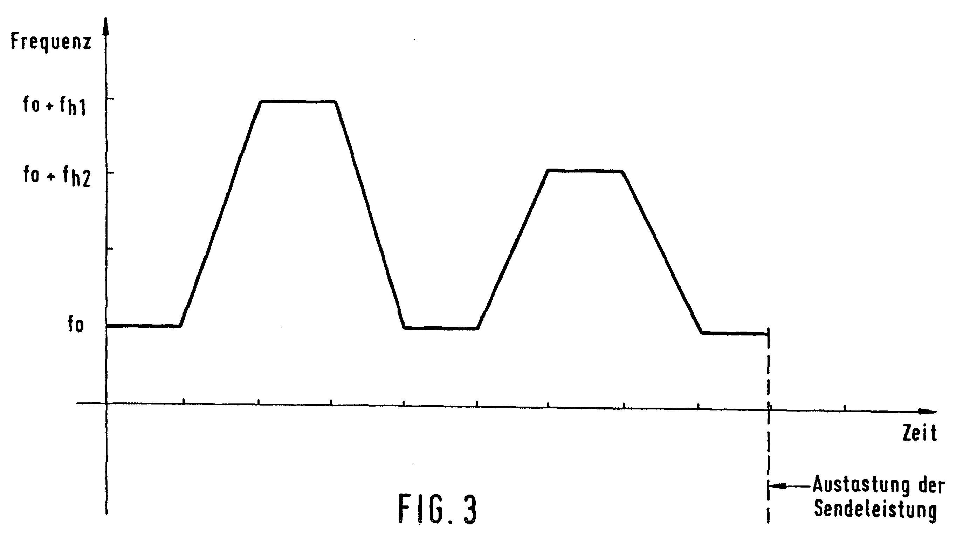

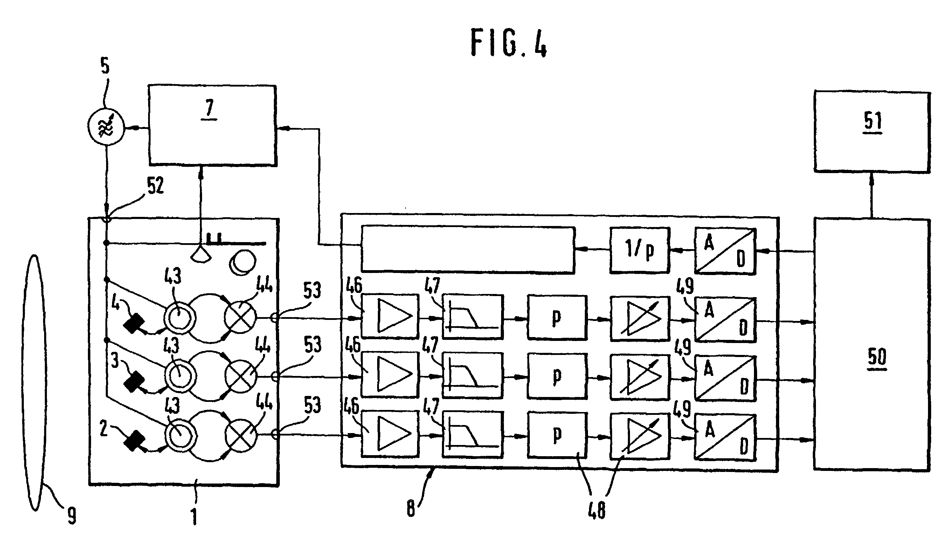

Die Funktionsweise dieser Anordnung wird anhand der Figuren 3 und 4 näher erläutert. Der Gunn-Oszillator 5 wird von dem Stabilisierungsnetzwerk 7 angesteuert. Das Stabilisierungsnetzwerk 7 enthält ein Linearisierungsnetzwerk mit einem Frequenzregler, der entsprechend dem Diagramm in Figur 3 eine Kurve für einen Frequenzgang mit dem dargestellten Frequenzverlauf nach dem Mehrrampenverfahren beispielsweise mit vier Flanken vorgibt. Durch das mehrstrahlige Verfahren wird vorteilhaft auch eine laterlae Positionsbestimmung von Objekten, beispielsweise von Fahrzeugen in Kurven ermöglicht. Eine mechanische Strahlschwenkung ist nicht erforderlich.

Nach Ablauf der trapezförmigen Frequenzgänge kann alternativ die Sendeleistung des Gunn-Oszillators 5 ausgetastet werden, um den mittleren Energieaufwand zu senken. Für eine neue Messung wird dann der Vorgang wiederholt. Es ist weiter vorgesehen, den Frequenzverlauf dreieckförmig zu gestalten, so daß das Dach an den beiden Trapezflanken entfällt. Eine derartige Ansteuerung wird vorteilhaft mit einem spannungsgesteuerten Frequenzgenerator erzeugt, der allgemein als VCO-Generator bekannt ist. Üblicherweise wird der Gunn-Oszillator 5 in Hohlleitertechnik hergestellt. Sein Ausgang ist mit einem Eingang 52 der lateralen Struktur des Mikrostreifenleiters 1 gekoppelt. Die Millimeter-Wellen werden über entsprechende Leitungen auf drei parallel geschaltete Ratraceringe 43 auf die daran angeschlossenen Sende-/Empfangsantennen-Feeds 2, 3, 4, sogenannten Patches bzw. Patcharrays gekoppelt. Vor den Patches können zusätzlich dielektrische Stielstrahler S angebracht sein, um eine bessere Ausleuchtung der dielektrischen Linse 9 zu erreichen. Durch die Anordnung mehrerer Patches in Form eines Arrays wird ebenfalls eine bessere Ausleuchtung der Linse 9 erreicht.

Die Ratraceringe 43 können auch als Doppelratraceringe ausgebildet sein. Sie werden in der Mikrostreifenleitertechnik als laterale Ringe ausgebildet, an denen die Sende-/Empfangsantennen 2, 3, 4 angekoppelt sind. Sie dienen zur Entkopplung und Mischung der Sende-/Empfangssignale. Jeweils drei Sende-/Empfangs-Antennen eines Patcharrays sind jeweils an einen Ratracering 43 angeschlossen. Die von den drei Sende-/Empfangsantennen 2, 3, 4 ausgesendeten Radarstrahlen werden beispielsweise an einem vorausfahrenden Fahrzeugen reflektiert und wieder auf die Sende-/Empfangsantennen 2, 3, 4 mittels der Linse 9 fokussiert. Die Signale gelangen über die drei Ratraceringe 43 und Ringmischer 44 an die drei Ausgänge 53 zur weiteren Signalverarbeitung. Über die Ringmischer 44 wird ein Teil der Energie des Gunn-Oszillators 5 abgezweigt und ins Basisband zurückgemischt. Die Frequenz des Gunn-Oszillators 5 ist abhängig von gesetzlichen Vorschriften. Sie liegt beispielsweise im Frequenzbereich zwischen 76 und 77 GHz. In diesem Frequenzband tritt nur eine geringe atmosphärische Dämpfung der elektromagnetischen Schwingung auf, so daß bei einem kleinen Signalpegel eine ausreichende Reichweite von ca. 150 m erreicht wird. Die Linearisierung der Frequenz des Gunn-Oszillators bei dem verwendeten Mehrfach-Rampenverfahren ist per se bekannt und muß daher nicht näher beschrieben werden. Die Linearisierung des Frequenzhubes kann schaltungstechnisch in einer Frequenzregelschleife erfolgen. Alternativ kann mit Hilfe der Hilbert-Transformation die Linearitätsabweichung und entsprechende Korrektur der Rampenfunktion bestimmt werden. Dieses Verfahren ist beispielsweise aus der DE 40 40 572 A1 bekannt.

Die an den drei Ausgängen 53 der Struktur des Mikrostreifenleiters 1 anstehenden herabgemischten Empfangssignale der einzelen Sende-/Empfangsantennen 2, 3, 4 werden vorteilhaft in drei getrennten Kanälen ausgewertet, da diese Signale den unterschiedlichen Empfangskeulen mit den darin detektierten Objekten entsprechen. Dazu wird auf einer Basisplatte 8 das Signal zunächst über einen Verstärker 46 verstärkt, in einem Tiefpaßfilter 47 gefiltert und in einem nachgeschalteten Bewertungsfilter 48 derart verändert, daß die entfernungsabhängigen Amplitudenabfälle der empfangenen Signale ausgeglichen werden. Nach einer A/D-Wandlung in einem A/D-Wandler 49 erfolgt in einer Auswertung 50 die Signalauswertung nach einer Fast-Fourrier-Transformation. Dieses wird vorteilhaft in einem Rechner mit einem entsprechenden Steuerprogramm durchgeführt. Aus den Frequenzunterschieden der ausgesandten und gleichzeitig empfangenen Wellen werden die Abstände zu einem bzw. zu mehreren Objekten berechnet. Die Geschwindigkeiten der Objekte werden aus den Differenzen der Frequenzunterschiede während der ansteigenden und abfallenden Flanken gemäß der Figur 3 berechnet. Durch Amplitudenauswertung der drei erzeugten Spektren wird eine laterale Auflösung der Winkellage aller Objekte berechnet, die sich im Ortungsfeld befinden.

In weiterer Ausgestaltung der Erfindung ist vorgesehen, die D/A-Wandler, Signalprozessoren sowie Filter und Verstärker als anwenderspezifische Schaltung, einem ASIC, auszubilden. Diese Auswerteschaltung 11 ist dann getrennt vom Mikrostreifenleiter 1 auf der Basisplatte 8 angeordnet. Am Ausgang der Auswertung 50 ist ein Bus 51, beispielsweise ein CAN-Bus (Computer Area Network) vorgesehen, über den die ermittelten Werte an entsprechende Einrichtungen, beispielsweise Anzeigen oder Steuereinrichtungen des Fahrzeugs weitergeleitet werden. Der Anschluß für den Bus 51 erfolgt dabei gemäß der Figur 2 in der Anschlußebene 12.

Insbsondere ist vorgesehen, den FMCW-Radarsensor zur Steuerung eines Fahrgeschwindigkeitsreglers und/oder einer Einparkhilfe zu verwenden.

## Patentansprüche

1. FMCW-Radarsensor für ein Fahrzeug zur Detektion von einem oder mehreren Objekten, mit einem Gehäuse, mit einem Gunn-Oszillator, mit wenigsten einer vorzugsweise drei auf eine dielektrische Linse ausgerichtete Antennen (Antennen-Feeds) für elektromagnetische Millimeter-Wellen und mit einer Auswertungsschaltung, **dadurch gekennzeichnet,**
- **daß** die wenigstens eine Antenne (2, 3, 4) sowohl zum Senden als auch zum Empfangen eines entsprechenden Echossignales ausgebildet ist,
- **daß** die wenigstens eine Antenne (2, 3, 4) über einen Ratracering (43) oder Doppelratracering mit einem Ringmischer (44) verbunden ist und
- **daß** wenigstens eine Antenne (2, 3, 4), der Ratracering (43) bzw. Doppeltratracering und/oder der Ringmischer (44) in planarer Mikroleiterstreifentechnik ausgebildet sind.

2. FMCW-Radarsensor nach Anspruch 1, **dadurch gekennzeichnet, daß** zwischen der Antenne (2, 3, 4) und der Linse (9) ein dielektrischer Stielstrahler (S) angeordnet ist.

3. FMCW-Radarsensor nach Anspruch 1 oder 2, **dadurch gekennzeichnet, daß** die wenigstens eine Antenne (2, 3, 4) als Antennenarray vorzugsweise zur Ausleuchtung einer elliptisch geformten Linse ausgebildet sind.

4. FMCW-Radarsensor nach einem der vorherigen Ansprüche, **dadurch gekennzeichnet, daß** benachbarte Antennen (2, 3, 4) in einem Winkel von ca. 45° zur Mittelachse der Linse (9) gedreht sind.

5. FMCW-Radarsensor nach Anspruch 1, **dadurch gekennzeichnet, daß** die mittlere von drei Antennen (3) zur Mittelachse der Linse (9) um ca. 135° gedreht ist.

6. FMCW-Radarsensor nach einem der vorherigen Ansprüche, **dadurch gekennzeichnet, daß** die Sendeenergie des Gunn-Oszillators (45) über einen Stufentransformator von der Hohlleiterebene auf die Mikrostreifenleiterebene einkuppelbar ist.

7. FMCW-Radarsensor nach einem der vorherigen Ansprüche, **dadurch gekennzeichnet, daß** der Gunn-Oszillator (45) nach Ablauf der Rampenfunktion austastbar ist.

8. FMCW-Radarsensor nach Anspruch 7, **dadurch gekennzeichnet, daß** die Rampenfunktion trapezförmig oder dreieckförmig ausgebildet ist.

9. FMCW-Radarsensor nach einem der vorherigen Ansprüche, **dadurch gekennzeichnet, daß** die Auswertungsschaltung (11) die Sendefrequenzen und die Empfangsfrequenzen unter Berücksichtigung der Dopplerverschiebungen vergleicht und daraus einen Relativabstand zum erfaßten Objekt bestimmt.

10. FMCW-Radarsensor nach einem der vorherigen Ansprüche, **dadurch gekennzeichnet, daß** das Gehäuse (10) hermetisch geschlossen ist und vorzugsweise an seiner äußeren Wandung ein Druckausgleichselement (13) aufweist.

11. FMCW-Radarsensor nach einem der vorherigen Ansprüche, **gekennzeichnet dadurch, daß** der FMCW-Radarsensor zur Steuerung eines Fahrgeschwindigkeitsreglers oder einer Einparkhilfe verwendbar ist.

## Claims

1. FMCW radar sensor for a vehicle for detection of one or more objects, having a housing, having a Gunn oscillator, having at least one antenna, and preferably three antennas (antenna feeds) aligned with a dielectric lens for electromagnetic millimetric waves, and having an evaluation circuit, **characterized**
- **in that** the at least one antenna (2, 3, 4) is designed both for transmitting and for receiving a corresponding echo signal,
- **in that** the at least one antenna (2, 3, 4) is connected via a ratrace ring (43) or a double ratrace ring to a ring mixer (44), and
- **in that** the at least one antenna (2, 3, 4), the ratrace ring (43) or the double ratrace ring and/or the ring mixer (44) use planar microconductor strip technology.

2. FMCW radar sensor according to Claim 1, **characterized in that** a dielectric rod antenna element (S) is arranged between the antenna (2, 3, 4) and the lens (9).

3. FMCW radar sensor according to Claim 1 or 2, **characterized in that** the at least one antenna (2, 3, 4) is in the form of an antenna array, preferably for illuminating an elliptically shaped lens.

4. FMCW radar sensor according to one of the preceding claims, **characterized in that** adjacent antennas (2, 3, 4) are rotated at an angle of approximately 45° with respect to the centre axis of the lens (9).

5. FMCW radar sensor according to Claim 1, **characterized in that** the central one of three antennas (3) is rotated through about 135° with respect to the centre axis of the lens (9).

6. FMCW radar sensor according to one of the preceding claims, **characterized in that** the transmission energy of the Gunn oscillator (45) can be coupled via a stepping transformer from the waveguide plane to the micro strip conductor plane.

7. FMCW radar sensor according to one of the preceding claims, **characterized in that** the Gunn oscillator (45) can be blanked out once the ramp function has ended.

8. FMCW radar sensor according to Claim 7, **characterized in that** the ramp function is trapezoidal or triangular.

9. FMCW radar sensor according to one of the preceding claims, **characterized in that** the evaluation circuit (11) compares the transmission frequencies and the received frequencies taking account of the Doppler shifts, and uses this to determine the relative distance to the detected object.

10. FMCW radar sensor according to one of the preceding claims, **characterized in that** the housing (10) is hermetically sealed, and preferably has a pressure equalizing element (13) on its outer wall.

11. FMCW radar sensor according to one of the preceding claims, **characterized in that** the FMCW radar sensor can be used for controlling a vehicle speed regulator or a parking aid.

## Revendications

1. Détecteur radar à modulation de fréquence et émission continue ou entretenue appliqué à un véhicule pour détecter un ou plusieurs objets comprenant :
dans un boîtier, un oscillateur à diodes Gunn, au moins une antenne et de préférence trois antennes (source primaire d'antennes) dirigées vers une lentille diélectrique pour des ondes électromagnétiques millimétriques ainsi qu'un circuit d'exploitation,
**caractérisé en ce que**
au moins une antenne (2, 3, 4) est réalisée à la fois pour l'émission et pour la réception d'un signal d'écho correspondant,
au moins une antenne (2, 3, 4) est reliée par un anneau de récupération (43) ou un anneau double de récupération à anneau mélangeur (44), et
au moins une antenne (2, 3, 4), l'anneau de récupération (43) ou double anneau de récupération et/ou le mélangeur en anneau (44) sont réalisés en technique planaire de micro-conducteurs à bandes.

2. Détecteur radar selon la revendication 1,
**caractérisé par**
un émetteur en tige (S) diélectrique installé entre les antennes (2, 3, 4) et la lentille (9).

3. Détecteur radar selon les revendications 1 ou 2,
**caractérisé en qu'**
au moins une antenne (3, 4) est un réseau d'antennes de préférence pour éclairer une lentille de forme elliptique.

4. Détecteur radar selon l'une des revendications précédentes,
**caractérisé en ce que**
les antennes voisines (2, 3, 4) sont tournées d'un angle d'environ 45° par rapport à l'axe de la lentille (9).

5. Détecteur radar selon la revendication 1,
**caractérisé en ce que**
l'antenne médiane parmi les trois antennes (3) est tournée d'environ 135° par rapport à l'axe de la lentille (9).

6. Détecteur radar selon l'une des revendications précédentes,
**caractérisé en ce que**
l'énergie d'émission de l'oscillateur à diodes Gunn (45) est injectée par un transformateur à gradins à partir du plan du guide d'ondes dans le plan des microbandes conductrices.

7. Détecteur radar selon l'une des revendications précédentes,
**caractérisé en ce que**
l'oscillateur à diodes Gunn (45) est coupé à la fin de la fonction de rampe.

8. Détecteur radar selon la revendication 7,
**caractérisé en ce que**
la fonction de rampe est de forme trapézoïdale ou triangulaire.

9. Détecteur radar selon l'une des revendications précédentes,
**caractérisé en ce que**
le circuit de traitement (11) compare les fréquences d'émission et celles de réception en tenant compte du décalage Doppler et en déduit la distance relative par rapport à l'objet détecté.

10. Détecteur radar selon l'une des revendications précédentes,
**caractérisé en ce que**
le boîtier (10) est fermé hermétiquement et sa paroi extérieure comporte de préférence un élément de compensation de pression (13).

11. Détecteur radar selon l'une des revendications précédentes,
**caractérisé en ce que**
le détecteur radar (FMCW) est appliqué à la commande d'un régulateur de vitesse de véhicule ou d'un moyen d'aide aux manoeuvres de rangement.
